Europäisches Patentamt

European Patent Office

Office européen des brevets

(19)

(11) EP 1 492 219 A2

(12) **EUROPEAN PATENT APPLICATION**

(43) Date of publication:
  **29.12.2004 Bulletin 2004/53**

(51) Int Cl.⁷: **H02M 7/00**

(21) Application number: **04102549.5**

(22) Date of filing: **04.06.2004**

(84) Designated Contracting States:
  **AT BE BG CH CY CZ DE DK EE ES FI FR GB GR
  HU IE IT LI LU MC NL PL PT RO SE SI SK TR**
  Designated Extension States:
  **AL HR LT LV MK**

(30) Priority: **20.06.2003 KR 2003040098**

(71) Applicant: **Samsung Electronics Co., Ltd.
  Suwon-si, Gyeonggi-Do 442-742 (KR)**

(72) Inventor: **YANG, Joon-hyun
  Gyeonggi-do (KR)**

(74) Representative: **Read, Matthew Charles et al
  Venner Shipley LLP
  20 Little Britain
  London EC1A 7DH (GB)**

(54) **Power supply for plasma display panel**

(57)    A high-efficiency power supply apparatus (1000) used with a driving system (260) of a display panel and a method of designing the same to improve an electrical power efficiency by providing a non-isolated DC power directly to a display panel driving circuit comprise: a DC power supplying circuit (230) to improve a power factor by rectifying an AC power and generating the non-isolated DC power, which is not isolated from the AC power, and an isolated DC power; a display panel driving circuit (260) to generate various driving signals for driving the display panel with the non-isolated DC power; and a video signal processing circuit (270) to perform a predetermined video signal processing for generating data to drive the display panel with the isolated DC power.

FIG. 2

## Description

The present invention relates to a power supply circuit for alternating current plasma display panel, comprising a rectifier configured to receive mains AC or the like as its input, a switching regulator arranged to receive the output of the rectifier as its input and a sustain voltage output for outputting a sustain voltage for an alternating current plasma display panel.

Generally, display panels, such as plasma display panels (PDPs) or ferroelectric liquid crystal (FLC) panels, are driven digitally.

An alternating current plasma display panel (AC PDP) is a next-generation flat panel display for displaying text and images using plasma formed by a discharge through a gas. Tens to hundreds of millions of pixels are arranged in a matrix according to a size of the AC PDP.

The AC PDP has the following advantages: wide view angle, large size, long lifespan, high contrast ratio and super-thin shape. Common disadvantages of the AC PDP are high cost and high power consumption.

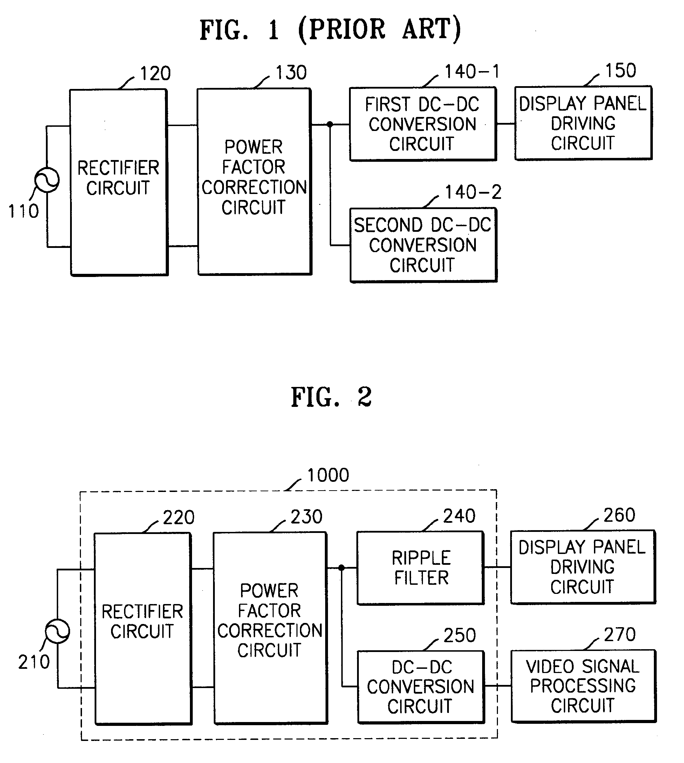

Figure 1 shows a conventional power supply apparatus used for an AC PDP.

Referring to Figure 1, the power supply apparatus includes an AC power source 110, a rectifier circuit 120, a power factor correction circuit 130, first and second DC-DC conversion circuits 104-1, 140-2, and a display panel driving circuit 150.

The output voltage of the second DC-DC converting circuit 140-2 is supplied to a signal and data processing circuit, such as a video signal processing circuit, and a microprocessor.

The circuit of the power supply apparatus in the conventional AC PDP is configured in a serially connected 2-stage configuration (hereinafter, referred to as a "two-stage configuration") such that the DC output voltage of the power factor correction circuit 130 is supplied as an input voltage to the first and second DC-DC conversion circuits 140-1, 140-2 and the output voltages of the first and second DC-DC conversion circuits 140-1, 140-2 are supplied to various loads.

The two-stage serial comfiguration is used to improve the power factor and to regulate an output voltage. However, an independent DC-DC conversion circuit of a two-transistor forward or a half-bridge type must be used for the display panel driving circuit 150. The display panel driving circuit 150 uses 75% of the system power output.

However, when the power supply for a display panel driving circuit 150 is configured in the two-stage serial configuration, the size of a plasma display panel (PDP) increases and power efficiency is lowered since power conversion is performed twice. For example, if the efficiency of the power factor correction circuit 130 is 95% and the efficiency of the first DC-DC conversion circuit 140-1 is 95%, the efficiency of the display panel driving circuit 150 is lowered to 90%.

A power supply circuit for alternating current plasma display panel, according to the present invention, is characterised in that the voltage output at the sustain voltage output is or is substantially the output voltage of the switching regulator.

A ripple filter is preferably interposed between the output of the switching regulator and the sustain voltage output.

A power supply according to the present invention may be included in an alternating current plasma display panel driving circuit, which also includes a sustain driving circuit, connected to the sustain voltage output of the power supply, high voltage scan and address driving circuit, including logic and a high voltage outputting circuit, and a video signal processing circuit.

The circuit may also include a photocoupler in a data signal path between the video signal processing circuit and the logic.

The power supply, the sustain driving circuit and high voltage scan and address driving circuit may share a first ground with the video signal processing circuit being connected to a second ground, isolated from the first ground.

Addition optional and preferred features of the present invention are set forth in claims 1 to 27 appended hereto.

Embodiments of the present invention will now be described, by way of example, with reference to Figures 2 to 6 of the accompanying drawings, in which:

Figure 1 is a block diagram showing a conventional power supply apparatus used for an alternating current plasma display panel (AC PDP);

Figure 2 is a block diagram showing a high-efficiency power supply apparatus used with a display panel driving system, according to the present invention;

Figure 3 is a detailed block diagram showing the rectifier circuit and the power factor correction circuit of the power supply apparatus shown in Figure 2;

Figure 4 is a detailed block diagram showing the rectifier circuit of the power supply apparatus shown in Figure 2;

Figure 5 is a detailed block diagram showing the ripple filter of the power supply apparatus shown in Figure 2; and

Figure 6 is a view showing the ground system of a another plasma display panel driving system according to the present invention.

A high-efficiency power supply apparatus used with a driving system of a display panel uses a non-isolated output voltage of a power factor correction circuit as the power supplied to the display panel driving circuit. That is, the non-isolated output voltage of the power factor correction circuit is directly supplied to the display panel driving circuit without passing through a DC-DC conversion circuit, to improve power efficiency.

A sustain driving circuit consumes about 75% of the power in the plasma display panel driving system. Therefore, when the present invention is applied to a sustain driving circuit, the power efficiency is increased.

However, in order to supply the output voltage of the non-isolated power factor correction circuit directly to the display panel driving circuit, without passing through the DC-DC conversion circuit, the following items should be considered:

(a) the voltage output from the power factor correction circuit and the voltage used in the display panel driving circuit should have the same value;
(b) since the output voltage of the power factor correction circuit includes lower frequency ripple voltage twice as much as the alternating current (AC) power frequency, the power factor correction circuit does not have good regulation features; and
(c) since the output voltage of the power factor correction circuit is not isolated from the mains AC power, an electrical isolation between the display panel and the driving circuit should be properly solved to satisfy electricity safety standards.

Referring to Figure 2, the power supply apparatus for a display panel driving system, according to the present invention, includes mains AC power 210, a rectifier circuit 220, a power factor correction circuit 230 (which may also be considered to be a buck converter topology switching regulator), a ripple filter 240, a DC-DC conversion circuit 250, a display panel driving circuit 260 and a video signal processing circuit 270.

The rectifier circuit 220, the power factor correction circuit 230, the ripple filter 240, and the DC-DC conversion circuit 250 are referred to as the "DC power supplying circuit" 1000.

The video signal processing circuit 270 processes an input broadcast television signal or other video signal to generate data used to drive the display panel and an isolated DC power output from the DC-DC conversion circuit 250 is used power the video signal processing circuit 270.

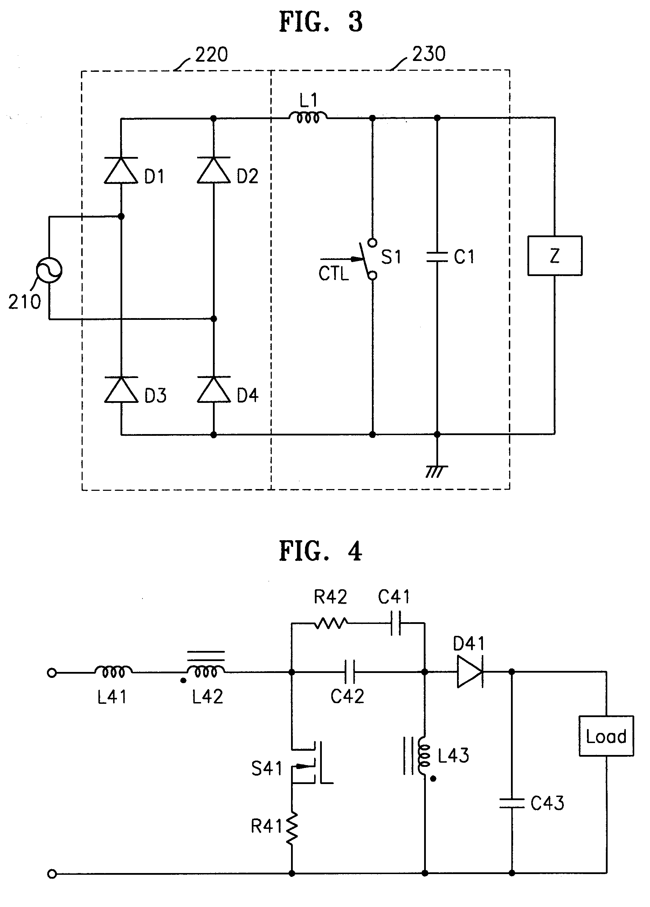

Detailed circuit configurations of the rectifier circuit 220 and the power factor correction circuit 230 are shown in Figure 3.

Referring to Figures 2 and 3, the rectifier circuit 220 rectifies the input from the mains AC power 210, using a bridge diode circuit configuration having diodes D1-D4, and outputs a DC voltage according to the rectified input.

Then, the power factor correction circuit 230 receives the DC voltage, improves its power factor, under the control of a pulse width modulation (PWM) control signal, and outputs an output voltage which is supplied to a load (Z) , such as the display panel driving circuit 260 or the video signal processing circuit 270, as a stabilized DC voltage. A capacitor C1 is connected in parallel with the load (Z).

When the PWM controlling signal (CTL) is high, a switch S1 is closed, the inductor L1 stores up magnetic energy, and the energy charged in the capacitor C1 discharges through the load (Z).

When the PWM controlling signal is low, the switch S1 is opened and the magnetic energy stored by the inductor L1 is transferred to the capacitor C1, charging it.

The power factor is improved through the above charging/discharging processes under the control of the PWM controlling signal.

The voltage output from the power factor correction circuit 230 and the voltage used in the display panel driving circuit should have the same value.

Therefore, the voltage output from the power factor correction circuit 230 and the voltage used in the display panel driving circuit 260 are equalized by changing the display panel driving voltage.

If, for example, the output voltage of a power factor correction circuit, applied to a plasma display system, is designed to be about 360 ~ 400V DC and a sustain driving voltage of the sustain driving circuit is designed to be about 160V, the output voltage of the power factor correction circuit must be lowered or the sustain driving voltage increased or both in order to implement the present invention.

In order to lower the output voltage of the power factor correction circuit 230, a single ended primary inductance converter (SEPIC) (which can also be considered to be an inverter topology switching regulator), including a converter controlling the level of the output voltage, as shown in Figure 4, can be used.

The SEPIC includes inductors L41, L42 and L43, a transistor S41, resistors R41 and R42, capacitors C41, C42 and C43, and a diode D41. The output voltage is lowered using a secondary winding, such as the inductor L42 or L43, in the power factor correction circuit 230. Also, the sustain driving voltage can be increased by changing the sustain driving circuit.

The low frequency ripple voltage and the regulation feature of the ripple filter 240 of the power supply apparatus can be improved in the following ways:

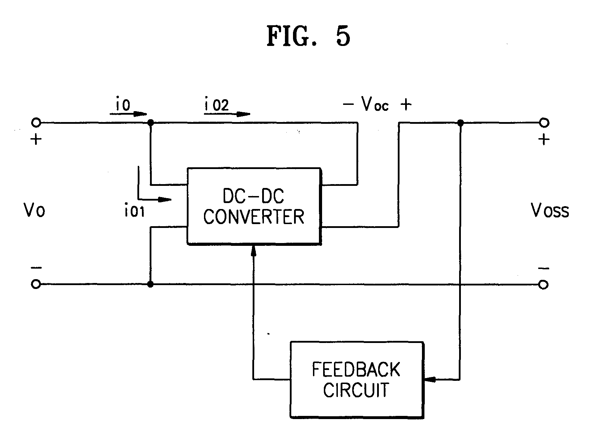

(a) the low frequency ripple and the regulation features can be improved by increasing the capacitance of the output capacitor C1 of the power factor correction circuit 230, shown in Figure 3; and
(b) inserting the ripple filter 240 (see Figure 5) between the power factor correction circuit 230 and the display panel driving circuit 260 for more improved functions.

The output electrical power of the power factor correction circuit 230 shown in FIG. 5 is $P_0 = v_0 i_0$, and it is divided into two parts. That is, $P_{01} = v_0 i_0$ is converted into $P_{02} = v_0 i_{02}$ with efficiency $\eta_c$. Therefore, a final output electrical power of a serial type ripple filter is $P_{oss}$

$=V_{oss} i_{02} = v_{0c} i_{02}+ v_0 i_{02}$. Here, if $v_{0C}i_{02} = v_0 i_{01} \cdot \eta_C$, it is the output electrical power of the DC-DC converter used in the serial type switching ripple filter, and an actual change of the electrical power is only generated on the above DC-DC converter. When it is assumed that the serial type switching ripple filter circuit is in one electrical power conversion stage, an entire efficiency $\eta_{SS}$ can be calculated using the following equation 1.

$$\eta_{SS} = \frac{1 + \dfrac{v_{oC}}{v_0}}{1 + \dfrac{v_{0C}}{\dfrac{v_0}{\eta_C}}} \qquad (1)$$

Therefore, in order to obtain high efficiency, the efficiency $\eta_C$ of the DC-DC converter must increase and the ratio of the voltage converted into the electric power for the output voltage of the power factor correction circuit 230 must decrease.

Solutions to the problem of providing electric isolation between the display panel and the driving circuit are described below.

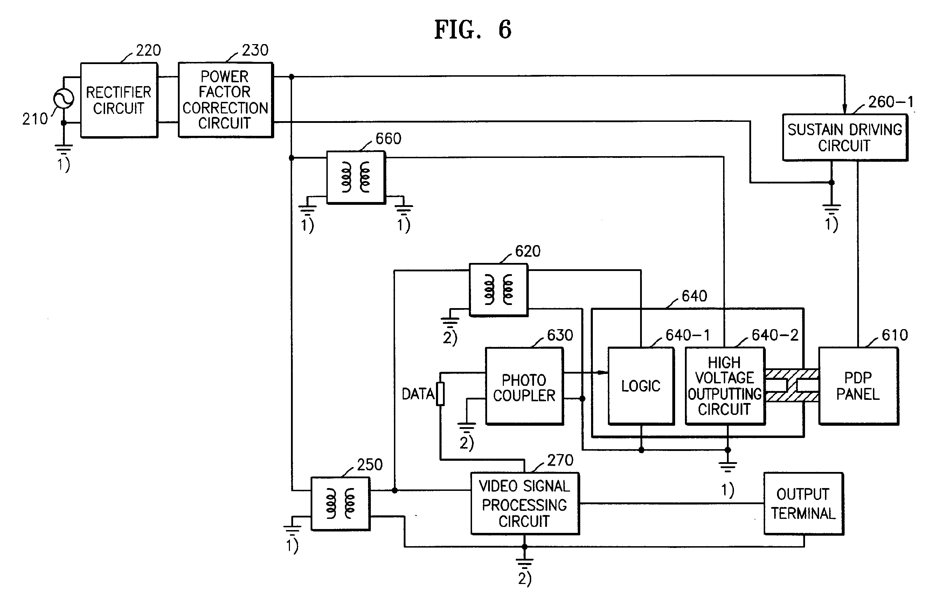

Referring to Figure 6, the video signal processing circuit 270 processes the input broadcast television signal or other video signal to generate the data used to drive the display panel and the isolated DC power output from the DC-DC conversion circuit is used as the driving power for the video signal processing circuit 270.

In addition, the power of the video signal processing circuit 270 is isolated by the DC-DC conversion circuit 620 from the high voltage scan and address driving circuit 640 and the data line is isolated by a photocoupler 630.

In the AC plasma display panel driving system, voltages larger than 160V are applied in the sustain driving operation and the lamp voltage is applied in a resetting operation and, therefore, it is as if the address and the scan driver IC is operated in an electrically floating state. Thus, the DC-DC conversion circuit 620 and the photocoupler 630 are used to isolate the circuit.

Also, since a large current of nearly 100A flows through the sustain driving circuit 260-1 with high frequency, the ground potential around the display panel changes a lot so that a mis-operation may be generated by the ground of the video signal processing circuit 270.

Therefore, it is required that the plasma display panel driving circuit and the video signal processing circuit 270 be isolated by the DC-DC conversion circuit 620 and the photocoupler 630 for stable operation.

Thus, a ground (first ground) of the output circuit of the non-isolated power factor correction circuit 230, the ground (first ground) of the sustain driving circuit 260-1, the ground (first ground) of an output circuit of the DC-DC conversion circuit 660 and the ground (first ground) of the scan and address driving circuit 640 are electrically connected together. In addition, the ground (second ground) of the output circuit of the DC-DC conversion circuit 250 and the ground (second ground) of the video signal processing circuit 270 are electrically connected together. The grounds are designed so that the first grounds and the second grounds are electrically isolated from each other.

Accordingly, the ground of the video signal processing circuit 270 is isolated from the ground of the AC power by the DC-DC conversion circuit 250 and isolated from the ground on the display panel driving circuit by the DC-DC conversion circuit 620 and the photocoupler 630. Thus, if a user touches a metal portion which is connected to the ground on the video signal processing circuit 270 and exposed outward, the user does not receive an electric shock and the international electricity safety standard IEC60035 is satisfied.

The plasma display panel 610 itself is not isolated. However, since a special glass, which is a superior insulating material, is generally used for the plasma display panel, there is no problem about the non-isolated plasma display panel. However, outer cases for exposed electrode portions of the plasma display panel and printed circuit board (PCB) mounted portions should be prepared.

Therefore, the above described three problems which may arise from a circuit configuration in which the output voltage of the non-isolated power factor correction circuit is transferred directly to the display panel driving circuit, without passing through the DC-DC conversion circuit, are dealt with.

In the present embodiment, the ripple filter 240 is inserted between the power factor correction circuit 230 and the display panel driving circuit 260. However, the ripple filter 240 may be omitted and the capacitance of the output capacitor C1 of the power factor correction circuit can be increased to improve the low frequency ripple and the regulation features.

As described above, the output voltage of the power factor correction circuit is directly applied to the display panel driving circuit or applied to the display panel driving circuit after being passed through the ripple filter without 2-stage serially configuring the power supply, used in the display panel driving circuit. Thus, the electrical power efficiency is improved, reliability of the circuit is improved by the simplification of the electrical circuits and material costs are lowered by the reduction in the number of semiconductor elements.

## Claims

1. A high-efficiency power supply apparatus used with a driving system driving a display panel, comprising:

   a direct current power supplying circuit to improve a power factor by rectifying an alternating current power, and generating a direct current power not isolated from the alternating current power, and a direct current power isolated from the alternating current power;

a display panel driving circuit to generate various driving signals to drive the display panel with the non-isolated direct current power; and

a video signal processing circuit to perform a predetermined video signal processing to generate data to drive the display panel with the isolated direct current power.

2. The apparatus of claim 1, wherein the direct current power supplying circuit comprises:

a rectifier circuit to rectify the AC power and to output the AC source as a direct current voltage;

a power factor correction circuit to receive the output of the rectifier circuit, to improve the power factor, and to generate the non-isolated direct current power which is not isolated from the alternating current power; and

a direct current-direct current conversion circuit to receive the non-isolated DC power and to convert the received non-isolated DC power into the isolated direct power having a predetermined level isolated from the alternating current power.

3. The apparatus of claim 2, wherein the power factor correction circuit includes a converter to control a level of the output voltage.

4. The apparatus of claim 3, wherein the converter includes a single ended primary inductance converter (SEPIC).

5. The apparatus of claim 2, wherein the direct current supplying circuit further comprises a ripple filter to filter a ripple by inputting the output of the power factor correction circuit.

6. The apparatus of claim 5, wherein the ripple filter includes a serial type switching ripple filter.

7. The apparatus of claim 1, wherein the display panel includes a plasma display panel.

8. The apparatus of claim 1, wherein the display panel driving circuit includes a sustain driving circuit of the plasma display panel.

9. The apparatus of claim 1, wherein the data generated by the video signal processing circuit is transferred to the display panel driving circuit through a photocoupler.

10. The apparatus of claim 1, wherein an output end ground (first ground) of the circuit generating non-isolated direct current power in the direct current power supplying circuit and a ground (first ground) of the display panel driving circuit are connected to each other, an output end ground (second ground) of the circuit generating isolated direct current power in the direct current power supplying circuit and a ground (second ground) of the video signal processing circuit are connected to each other, and the first grounds and the second grounds are electrically blocked from each other.

11. A method of designing a high-efficiency power supply apparatus used with a display panel driving system of a display panel, comprising:

providing a non-isolated direct current power which is not isolated from input alternating current power directly to a display panel driving circuit;

providing an isolated direct current power which is isolated from the input alternating current power to a video signal processing circuit which performs a predetermined video signal process to generate data used to drive a display panel; and

isolating the display panel driving circuit and the video signal processing circuit.

12. The method of claim 11, wherein a ground (first ground) of the circuit generating non-isolated direct current power in the direct current power supplying circuit and a ground (first ground) of the display panel driving circuit are connected to each other, a ground (second ground) of the circuit generating isolated direct current power in the direct current power supplying circuit and a ground (second ground) of the video signal processing circuit are connected to each other, and the first grounds and the second grounds are electrically blocked from each other.

13. The method of claim 11, wherein the non-isolated direct current power is an output power of a power factor correction circuit.

14. The method of claim 11, wherein the non-isolated direct current power is an output power passed through the power factor correction circuit and a ripple filter.

15. The method of claim 11, wherein the data generated by the video signal processing circuit is transferred to the display panel driving circuit through a photocoupler.

16. The method of claim 11, wherein the display panel includes a plasma display panel.

**17.** The method of claim 11, wherein the display panel driving circuit includes a sustain driving circuit of the plasma display panel.

**18.** A display panel driving system having a video signal processing circuit and a display panel driving circuit to drive a display panel, comprising:

a power supply unit generating a non-isolated power to the display panel driving circuit and an isolated power to the video signal processing circuit, wherein the non-isolated power is isolated from the isolated power so that the display panel driving circuit is isolated from the video signal processing circuit.

**19.** The system of claim 18, wherein the display panel driving circuit comprises a sustain driving circuit connected to a first ground potential, and the video signal processing circuit connected to a second ground potential which is isolated from the first ground potential.

**20.** The system of claim 18, further comprising:

a DC-DC conversion circuit coupled between the power supply unit and the video signal processing circuit, wherein the power supply unit comprises a circuit receiving an AC power and outputting a DC power, and the DC power is transmitted to the video signal processing circuit through the DC-DC conversion circuit and directly to the display panel driving circuit.

**21.** The system of claim 20, wherein the display panel driving circuit and the DC-DC conversion circuit are connected to a first ground potential, and the video signal processing circuit is connected to a second ground potential which is isolated from the first ground potential.

**22.** The system of claim 21, further comprising:

a high voltage outputting circuit supplying a high voltage to the display panel and connected to the first ground potential; and a converter connected between the high voltage outputting circuit having primary and secondary coils connected to the first ground potential.

**23.** The system of claim 21, further comprising:

a photocoupler coupled between the video signal processing circuit and the display panel driving circuit and connected to the second ground potential.

**24.** The system of claim 23, further comprising:

a logic circuit coupled to the photocoupler to transmit data generated from the video processing circuit to the display panel driving circuit; and a converter coupled between the logic and the DC-DC converter, and coupled to the second ground potential.

**25.** The system of claim 18, wherein the display panel is a plasma display panel (PDP) receiving data from the video signal processing circuit and a driving signal from the display panel driving circuit according to the data, and the system does not have a DC-DC conversion circuit connected between the power supply apparatus and the display panel driving circuit so that the non-isolated power is supplied directly to the display panel driving circuit.

**26.** A method of driving a display panel in a display panel driving system having a video signal processing circuit and a display panel driving circuit, the method comprising:

generating a non-isolated direct current power and an isolated direct current power from an input alternating current power; and supplying the non-isolated direct current power to the display panel driving circuit and the isolated direct current power to the video signal processing circuit.

**27.** The method of claim 26, further comprising:

isolating the display panel driving circuit from the video signal processing circuit.

**28.** A power supply circuit for alternating current plasma display panel, the circuit comprising:

a rectifier (220) configured to receive mains AC or the like as its input; a switching regulator (230) arranged to receive the output of the rectifier as its input; and a sustain voltage output for outputting a sustain voltage for an alternating current plasma display panel,

**characterised in that** the voltage output at the sustain voltage output is or is substantially the output voltage of the switching regulator (230).

**29.** A power supply circuit according to claim 28, including a ripple filter (240) interposed between the output of the switching regulator (230) and the sustain voltage output.

**30.** An alternating current plasma display panel driving circuit including:

> a power supply (220, 230) according to claim 28 or 29;
> a sustain driving circuit (260-1) connected to the sustain voltage output;
> high voltage scan and address driving circuit (640) including logic (640-1) and a high voltage outputting circuit (640-2); and
> a video signal processing circuit (270).

**31.** A circuit according to claim 30, including a photocoupler (630) in a data signal path between the video signal processing circuit (270) and the logic (640-1).

**32.** A signal according to claim 30 or 31, wherein the power supply (220, 230), the sustain driving circuit (260-1) and high voltage scan and address driving circuit (640) share a first ground and the video signal processing circuit (270) is connected to a second ground, isolated from the first ground.

## FIG. 1 (PRIOR ART)

```
          120                 130              140-1              150
    ┌──────────────┐  ┌──────────────────┐  ┌──────────────┐  ┌──────────────┐
    │              │  │                  │  │ FIRST DC-DC  │  │ DISPLAY PANEL│
    │   RECTIFIER  │  │      POWER       │  │ CONVERSION   │  │   DRIVING    │
    │    CIRCUIT   │  │      FACTOR      │  │   CIRCUIT    │  │   CIRCUIT    │
    │              │  │   CORRECTION     │  └──────────────┘  └──────────────┘
    │              │  │     CIRCUIT      │
110 │              │  │                  │        140-2
    │              │  │                  │  ┌──────────────┐
    │              │  │                  │  │ SECOND DC-DC │
    │              │  │                  │  │ CONVERSION   │
    │              │  │                  │  │   CIRCUIT    │
    └──────────────┘  └──────────────────┘  └──────────────┘
```

## FIG. 2

```
                              1000
    ┌─ ─ ─ ─ ─ ─ ─ ─ ─ ─ ─ ─ ─ ─ ─ ─ ─ ─ ─ ─ ┐
       220              230              240                260
    ┌──────────┐  ┌──────────────┐  ┌──────────┐      ┌──────────────┐
    │          │  │              │  │          │      │ DISPLAY PANEL│
    │RECTIFIER │  │    POWER     │  │  RIPPLE  │      │   DRIVING    │
    │ CIRCUIT  │  │    FACTOR    │  │  FILTER  │      │   CIRCUIT    │
    │          │  │ CORRECTION   │  └──────────┘      └──────────────┘
210 │          │  │   CIRCUIT    │        250                270
    │          │  │              │  ┌──────────┐      ┌──────────────┐
    │          │  │              │  │  DC-DC   │      │ VIDEO SIGNAL │
    │          │  │              │  │CONVERSION│      │ PROCESSING   │
    │          │  │              │  │ CIRCUIT  │      │   CIRCUIT    │
    └──────────┘  └──────────────┘  └──────────┘      └──────────────┘
    └─ ─ ─ ─ ─ ─ ─ ─ ─ ─ ─ ─ ─ ─ ─ ─ ─ ─ ─ ─ ┘
```

# FIG. 3

# FIG. 4

# FIG. 5

FIG. 6